# FASCICULE DE BREVET EUROPEEN

(11) **EP 4 440 742 B1**
(45) Date de publication et mention de la délivrance du brevet: **15.04.2026**
(21) Numéro de dépôt: 22821385.6
(22) Date de dépôt: 21.11.2022
(51) Int. Cl.: B01J 29/16, B01J 29/80, B01J 29/78, C10G 47/20

(54) **CATALYSEUR D'HYDROCRAQUAGE COMPRENANT UNE ZEOLITE Y AYANT UN PARAMETRE DE MAILLE STRICTEMENT SUPERIEUR A 24,50 ANGSTROM ET UNE ZEOLITHE BETA AVEC UN RAPPORT Y/BETA COMPRIS ENTRE 5 ET 12 POUR LA PRODUCTION DE NAPHTA**
HYDROCRACKING-KATALYSATOR ZUR NAPHTHA-HERSTELLUNG MIT EINEM Y-ZEOLITH MIT EINER GITTERKONSTANTE VON AUSSCHLIESSLICH ÜBER 24.50 ANGSTROM UND EINEM BETA-ZEOLITH MIT DEM Y/BETA-VERHÄLTNIS ZWISCHEN 5 UND 12
HYDROCRACKING CATALYST FOR NAPHTHA PRODUCTION, COMPRISING A Y ZEOLITE HAVING A LATTICE CONSTANT STRICTLY GREATER THAN 24.50 ANGSTROMS AND A BETA ZEOLITE, WHEREIN THE Y/BETA RATIO IS BETWEEN 5 AND 12

(30) Priorité: 29.11.2021 FR 2112645
(43) Date de publication de la demande: 09.10.2024
(73) Titulaire: IFP Energies nouvelles, 92500 Rueil-Malmaison (FR)
(72) Inventeur: DODIN, Mathias, 92852 RUEIL-MALMAISON CEDEX (FR); DAUDIN, Antoine, 92852 RUEIL-MALMAISON CEDEX (FR)
(74) Mandataire: IFP Energies nouvelles
(86) Numéro de dépôt international: PCT/EP2022/082575
(87) Numéro de publication internationale: WO 2023/094309

(56) Documents cités:
- US-A- 5 160 033
- US-B1- 11 154 845
- US-B2- 7 510 645

## Description

### Domaine de l'invention

L'invention concerne un catalyseur d'hydrocraquage à base de zéolithe Y et Beta ainsi que son utilisation pour la production de naphta par hydrocraquage de coupes pétrolières de type distillats sous vide et gazole. Ce type de procédé est notamment utilisé dans les schémas destinés à la conversion de charges hydrocarbonées pour la production d'intermédiaires pétrochimiques et carburants essences.

Les catalyseurs d'hydrocraquage sont généralement classés sur la base de la nature de leur fonction acide, en particulier les catalyseurs comprenant une fonction acide amorphe de type silice alumine et les catalyseurs comprenant une fonction craquante zéolithique telle que la zéolithe Y ou la zéolite beta.

Les catalyseurs d'hydrocraquage sont également classés en fonction du produit majoritaire obtenu lors de leur utilisation dans un procédé d'hydrocraquage, les deux produits principaux étant les distillats moyens et le naphta.

On entend par coupe naphta ou naphta, la fraction pétrolière ayant un point d'ébullition inférieur à la coupe distillats moyens. La coupe distillats moyens présente généralement un point de coupe compris entre 150°C et 370°C pour maximiser la production de kérosène et de gazole. Néanmoins, dans le cas de procédé orienté spécifiquement à la production de naphta par exemple, le point de coupe inférieur de la coupe distillats moyens peut être augmenté pour accroître les rendements en naphta.

Dans ce but, la coupe naphta peut présenter des points d'ébullition compris entre celui des composés hydrocarbonés ayant 6 atomes de carbones par molécule (ou 68°C de point d'ébullition) jusqu'à 216°C et inclut la coupe essence.

Il existe une forte demande pour les coupes essences et naphta. C'est la raison pour laquelle les raffineurs se sont focalisés depuis plusieurs années sur les catalyseurs d'hydrocraquage sélectifs envers la coupe naphta.

Il est connu d'utiliser des catalyseurs à base de zéolithe de type FAU pour produire une coupe naphta.

Le brevet US7611689 (Shell) décrit une zéolithe Y de type FAU, un catalyseur comprenant ladite zéolithe, sa préparation et son utilisation dans un procédé d'hydrocraquage. En particulier, la zéolithe FAU présente un paramètre de maille compris entre 24,40 et 24,50 angströms (Å), un rapport molaire silice sur alumine (SAR) compris entre 5 et 10, et une teneur en métal alcalin inférieure à 0,15% poids. Il est mis en évidence que de telles zéolithes présentent une sélectivité élevée envers la coupe naphta et en particulier une sélectivité élevée envers la coupe naphta lourde, lorsqu'elles sont utilisées dans un procédé d'hydrocraquage.

D'autres catalyseurs à base de zéolithe Y et Beta peuvent également être utilisés.

Le brevet US7510645 (UOP) décrit un catalyseur d'hydrocraquage contenant une zéolithe Beta et une zéolithe Y, la zéolithe Y ayant un paramètre de maille compris entre 24,38 et 24,50 angströms (Å), le catalyseur étant caractérisé par un ratio massique Y/Beta compris entre 5 et 12. Le catalyseur présente une proportion en zéolithe Y relativement élevée par rapport à la proportion en zéolithe Beta. Il est mis en évidence que ces catalyseurs présentent une sélectivité et une activité améliorée comparées aux catalyseurs classiques commerciaux. Il est également décrit un procédé d'hydrocraquage utilisant lesdits catalyseurs à haute température et haute pression pour convertir une charge hydrocarbonée en un produit ayant un point d'ébullition et un poids moléculaire inférieur. En particulier, le produit obtenu comprend une large proportion en composant bouillant dans la gamme de température de la coupe naphta (C6-216°C).

Le document US-A-5 160 033 divulgue un catalyseur d'hydrocraquage et un procédé d'hydrocraquage orienté vers la production de naphta. Le catalyseur de l'exemple 3 comprend une zéolite Y (42% en poids), une zéolite beta (14% en poids), une matrice minérale (pseudoboemite, 18 % en poids), NiO (4,85% en poids) et WO3 (19,59 % en poids). La zéolithe Y présente un paramètre cristallin initial a0 de la maille élémentaire de 24,505 et le rapport pondéral de la zéolite Y sur la zéolite beta est 3.

En tentant de développer un nouveau catalyseur d'hydrocraquage sélectif envers la coupe naphta, le demandeur a découvert, de manière surprenante, qu'un catalyseur comprenant au moins un élément hydro-déshydrogénant choisi dans le groupe formé par les éléments du groupe VIB et du groupe VIII non nobles de la classification périodique, et un support comprenant au moins une matrice minérale poreuse, une zéolithe Y présentant un paramètre cristallin initial a0 de la maille élémentaire compris entre 24,52 et 24,70 Å, et une zéolithe

Beta, le catalyseur ayant un rapport pondéral de ladite zéolithe Y sur ladite zéolithe Beta compris entre 5 et 12, permet d'obtenir une activité améliorée vers la coupe naphta, notamment par rapport aux catalyseurs de l'état de la technique.

### Objet de l'invention

Plus précisément, la présente invention concerne un catalyseur d'hydrocraquage, comprenant au moins un élément hydro-déshydrogénant choisi dans le groupe formé par les éléments du groupe VIB et du groupe VIII non noble pris seul ou en mélange de la classification périodique, et un support comprenant au moins une matrice minérale poreuse, une zéolithe Y présentant un paramètre cristallin initial a₀ de la maille élémentaire compris entre 24,52 et 24,70 Å, et une zéolithe Beta, dans lequel le rapport pondéral de ladite zéolithe Y sur ladite zéolithe Beta dans le catalyseur est compris entre 5 et 12.

La présente invention concerne avantageusement un catalyseur d'hydrocraquage comprenant au moins un élément hydro-déshydrogénant choisi dans le groupe formé par les éléments du groupe VIB et du groupe VIII non noble pris seul ou en mélange de la classification périodique, et un support comprenant au moins une matrice minérale poreuse, une zéolithe Y présentant un paramètre cristallin initial a₀ de la maille élémentaire compris entre 24,52 et 24,70 Å, et une zéolithe Beta, dans lequel le rapport pondéral de ladite zéolithe Y sur ladite zéolithe Beta dans le catalyseur est compris entre 5 et 12.

La présente invention concerne avantageusement un catalyseur d'hydrocraquage comprenant au moins un élément hydro-déshydrogénant choisi dans le groupe formé par les éléments du groupe VIB et du groupe VIII non noble pris seul ou en mélange de la classification périodique, et un support comprenant au moins une matrice minérale poreuse, une zéolithe Y présentant un paramètre cristallin initial a0 de la maille élémentaire compris entre 24,52 et 24,70 Å, et une zéolithe Beta, dans lequel le rapport pondéral de ladite zéolithe Y sur ladite zéolithe Beta dans le catalyseur est compris entre 5 et 12.

Ce rapport pondéral est calculé à partir des masses sèches de zéolithes, c'est-à-dire les masses des zéolithes corrigées de leur teneur en eau déterminée par mesure de Perte Au Feu à 1000 °C. (masse sèche)

Un autre objet de la présente invention est un procédé d'hydrocraquage d'une charge hydrocarbonée en présence dudit catalyseur.

Un avantage de la présente invention est de fournir un catalyseur d'hydrocraquage permettant l'obtention d'une activité améliorée vers la coupe naphta lorsque ledit catalyseur est utilisé dans un procédé d'hydrocraquage selon l'invention, comparativement aux catalyseurs de l'état de l'art, tout en maintenant une sélectivité vers la coupe naphta comparable à celles obtenues avec les catalyseurs de l'art antérieur.

Dans la présente invention, l'activité convertissante des catalyseurs d'hydrocraquage pour la production de naphta est déterminée pendant un test catalytique en comparant la température à laquelle le catalyseur doit être mis en œuvre pour produire au moins 65%pds de produits ayant un point d'ébullition inférieur à 216°C. Plus la température requise est faible, plus le catalyseur est actif. Cette diminution de température permet par exemple de limiter la consommation énergétique du procédé et d'accroître la durée de cycle d'utilisation du catalyseur, voire de traiter des charges moins réactives sans modification de la capacité et du schéma de procédé.

Dans la présente invention, la sélectivité des catalyseurs d'hydrocraquage pour la production de naphta est déterminée pendant un test catalytique et correspond à la fraction, en pourcentage poids, du produit bouillant dans la gamme de la coupe naphta, c'est-à-dire entre la température d'ébullition des composés hydrocarbonés ayant 6 atomes de carbones par molécule (ou 68°C de point d'ébullition) jusqu'à 216°C, par rapport à la masse totale de produit en sortie du procédé.

Dans le sens de la présente invention, les différents modes de réalisation présentés peuvent être utilisés seuls ou en combinaison les uns avec les autres, sans limitation de combinaison.

Dans le sens de la présente invention, les différentes plages de paramètres pour une étape donnée telles que les plages de pression et les plages de température peuvent être utilisées seules ou en combinaison. Par exemple, dans le sens de la présente invention, une plage préférée de valeurs de pression peut être combinée avec une plage de valeurs de température plus préférée.

Dans la suite du texte, les groupes d'éléments chimiques sont donnés selon la classification CAS (CRC Handbook of Chemistry and Physics, éditeur CRC press, rédacteur en chef D.R. Lide, 81ème édition, 2000-2001). Par exemple, le groupe VIII selon la classification CAS correspond aux métaux des colonnes 8, 9 et 10 selon la nouvelle classification IUPAC, et le groupe VIB aux métaux de la colonne 6.

Dans la suite du texte, les expressions « compris entre ... et ... » et « entre .... et ... » sont équivalentes et signifient que les valeurs limites de l'intervalle sont incluses dans la gamme de valeurs décrite. Si tel n'était pas le cas et que les valeurs limites n'étaient pas incluses dans la gamme décrite, une telle précision sera apportée par la présente invention.

### Description détaillée de l'invention

### La fonction hydro/deshydrogénante

Conformément à l'invention, le catalyseur comprend au moins un élément hydro-déshydrogénant choisi dans le groupe formé par les éléments du groupe VIB et du groupe VIII non nobles de la classification périodique, pris seuls ou en mélange.

De préférence, le catalyseur selon l'invention comprend une phase active comprenant, de préférence constitué de, au moins un métal du groupe VIB et d'au moins un métal du groupe VIII.

De préférence, les éléments du groupe VIII sont choisis parmi le fer, le cobalt, le nickel, pris seuls ou en mélange, et de manière préférée parmi le nickel et le cobalt. De préférence, les éléments du groupe VIB sont choisis parmi le tungstène et le molybdène, pris seuls ou en mélange. Les associations suivantes de métaux sont préférées : nickel-molybdène, cobalt-molybdène, nickel-tungstène, cobalt-tungstène, et de manière très préférée : nickel-molybdène, nickel-tungstène. Il est également possible d'utiliser des associations de trois métaux telles que par exemple nickel-cobalt-molybdène.

La teneur du catalyseur en élément du groupe VIII est avantageusement comprise entre 0,5 et 8% en poids d'oxyde par rapport au poids total dudit catalyseur, de manière préférée entre 0,5 et 6% en poids d'oxyde et de manière très préférée entre 1,0 et 4% en poids d'oxyde. La teneur du catalyseur en élément du groupe VIB est avantageusement comprise entre 1 et 30% en poids d'oxyde par rapport au poids total dudit catalyseur, de manière préférée entre 2 et 25% en poids d'oxyde, de manière très préférée entre 5 et 20% en poids d'oxyde, et de manière encore plus préférée entre 5 et 16% en poids d'oxyde.

De manière préférée, le catalyseur mis en œuvre selon l'invention peut également contenir un élément promoteur choisi parmi le phosphore, bore, silicium, de manière très préférée du phosphore. Lorsque le catalyseur contient du phosphore, la teneur en phosphore est avantageusement comprise entre 0,5 et 10% en poids d'oxyde P₂O₅ par rapport au poids total dudit catalyseur, de manière préférée comprise entre 1 et 6% en poids d'oxyde P₂O₅ et de manière plus préférée entre 1 et 4% en poids d'oxyde P₂O₅.

### Le support

Le catalyseur selon l'invention comprend un support qui comprend et est de préférence constitué par au moins une matrice minérale poreuse, une zéolithe Y présentant un paramètre cristallin initial a₀ de la maille élémentaire compris entre 24,52 et 24,70 Å, et une zéolithe Beta.

La matrice minérale poreuse utilisée dans le support du catalyseur, appelée encore liant, est avantageusement constituée d'au moins un oxyde réfractaire, de préférence choisi dans le groupe formé par l'alumine, la silice-alumine, l'argile, l'oxyde de titane, l'oxyde de bore et la zircone, pris seuls ou en mélange. De manière préférée, la matrice minérale poreuse est choisie parmi l'alumine et la silice-alumine, prises seules ou en mélange. De manière plus préférée, la matrice minérale poreuse est l'alumine. L'alumine peut avantageusement se présenter sous toutes ses formes connues de l'homme du métier. De manière très préférée, l'alumine est l'alumine gamma, par exemple la boehmite.

De préférence, ledit support comprend de 15 à 60%poids de liant, de manière préférée de 15% à 40% en poids, et de manière très préférée entre 20% et 40% en poids, par rapport au poids total dudit support.

Selon l'invention, le support comprend une zéolithe Y présentant un paramètre cristallin initial a0 de la maille élémentaire compris entre 24,52 et 24,70 Å.

De préférence, le paramètre cristallin initial a0 de la maille élémentaire de la zéolithe Y utilisée est compris entre 24,52 Å et 24,65 Å, et de manière préférée compris entre 24,52 Å et 24,60 Å et de manière très préférée compris entre 24,52 Å et 24,58 Å.

Le paramètre cristallin initial a0 de la maille élémentaire de la zéolithe Y donné est la valeur du paramètre cristallin initial a0 de la zéolithe Y utilisée dans la synthèse du catalyseur selon l'invention.

Le paramètre cristallin initial a0 de la maille élémentaire de la zéolithe Y est mesuré par Diffraction des Rayons X selon la norme ASTM 03942-80.

De préférence, ledit support présente une teneur en zéolithe Y comprise entre 35 à 70% poids par rapport au poids total dudit support, de préférence entre 50 à 70% poids, et de manière préférée entre 55 à 65% poids.

Lesdits zéolithes sont avantageusement définies dans la classification "Atlas of Zeolite Framework Types, 6th revised edition", Ch. Baerlocher, L. B. Mc Cusker, D.H. Olson, 6ème Edition, Elsevier, 2007, Elsevier".

Selon un mode de réalisation préférée de l'invention, la zéolithe Y présentant la caractéristique particulière définie ci-dessus et convenant pour la mise en œuvre du support du catalyseur utilisé dans le procédé selon l'invention est avantageusement préparée à partir d'une zéolithe Y de type structural FAU présentant de préférence un rapport atomique global Si/Al après synthèse compris entre 2,3 et 2,8 et se présentant avantageusement sous forme NaY après synthèse. Ladite zéolithe Y de type structural FAU subit avantageusement une étape d'un ou plusieurs échanges ioniques avant de subir l'étape de désalumination. Le ou les échanges ioniques permettent de remplacer de manière partielle ou totale les cations alcalins appartenant aux groupes IA et IIA de la classification périodique présents en position cationique dans la zéolithe Y de type structural FAU brute de synthèse par des cations NH₄+ et de préférence des cations Na+ par des cations NH₄+.

On entend par échange partiel ou total des cations alcalins par des cations NH₄+, l'échange de 80 à 100 %, de manière préférée de 85 à 99,5 % et de manière plus préférée de 88 à 99 %, desdits cations alcalins par des cations NH₄+. A l'issue de la ou des étapes d'échange ionique, la quantité restante de cations alcalins, et de préférence la quantité restante de cations Na+, dans la zéolithe Y, par rapport à la quantité de cations alcalins, de préférence Na+, initialement présente dans la zéolithe Y, est avantageusement compris entre 0 et 20 %, de préférence entre 0,5 et 15 % et de manière préférée entre 1,0 et 12 %.

De préférence, cette étape met en œuvre plusieurs échange ionique avec une solution contenant au moins un sel d'ammonium choisi parmi les sels de chlorate, sulfate, nitrate, phosphate, ou acétate d'ammonium, de manière à éliminer au moins en partie, les cations alcalins et de préférence les cations Na+ présents dans la zéolithe. De préférence, le sel d'ammonium est le nitrate d'ammonium NH₄NO₃.

Ainsi, la teneur restante en cations alcalins et de préférence en cations Na+ dans la zéolithe Y à l'issue de l'étape d'échange(s) ionique(s) est de préférence telle que le rapport molaire cation alcalin/aluminium et de préférence le rapport molaire Na/Al, est compris entre 0:1 et 0:1, de préférence compris entre 0:1 et 0,005:1, et de manière plus préférée entre 0:1 et 0,008:1.

Le rapport cation alcalin/aluminium, de préférence Na/Al, désiré est obtenu en ajustant la concentration en NH₄+ de la solution d'échange ionique, la température d'échange ionique et le nombre d'échanges ioniques. La concentration de la solution d'échange ionique en NH₄+ varie avantageusement entre 0,01 et 12 mol.L-1, et de préférence entre 1,00 et 10 mol.L-1. La température de l'étape d'échange ionique est avantageusement comprise entre 20 et 100 °C, de préférence entre 60 et 95 °C, de manière préférée entre 60 et 90 °C, de manière plus préférée entre 60 et 85 °C et de manière encore plus préférée entre 60 et 80 °C. Le nombre d'échanges ioniques varie avantageusement entre 1 et 10 et de préférence entre 1 et 4.

Ladite zéolithe Y, de préférence de type structural FAU, obtenue peut ensuite subir une étape de traitement de désalumination. Ladite étape de désalumination peut avantageusement être réalisée par toutes les méthodes connues de l'Homme du métier. De manière préférée, la désalumination est réalisée par un traitement thermique éventuellement en présence de vapeur d'eau (ou steaming selon la terminologie anglo-saxonne) et/ou par une ou plusieurs attaques acides avantageusement réalisées par traitement avec une solution aqueuse d'acide minéral ou organique.

De préférence, l'étape de désalumination met en œuvre un traitement thermique suivi d'une ou plusieurs attaques acides, ou seulement une ou plusieurs attaques acides.

De préférence, le traitement thermique éventuellement en présence de vapeur d'eau auquel est soumis ladite zéolithe Y est réalisé à une température comprise entre 200 et 900 °C, de préférence entre 300 et 900 °C, de manière encore plus préférée entre 400 et 750 °C. La durée dudit traitement thermique est avantageusement supérieure ou égale à 0,5 h, de préférence comprise entre 0,5 h et 24 h, et de manière très préférée entre 1 h et 12 h. Dans le cas où le traitement thermique est réalisé en présence d'eau, le pourcentage volumique de vapeur d'eau durant le traitement thermique est avantageusement compris entre 5 et 100 %, de préférence entre 20 et 100 %, de manière très préférée entre 40 et 100 %. La fraction volumique autre que la vapeur d'eau éventuellement présente est formée d'air. Le débit de gaz formé de vapeur d'eau et éventuellement d'air est avantageusement compris entre 0,2 L.h-1.g-1 et 10 L.h-1.g-1 de la zéolithe Y.

Le traitement thermique permet d'extraire les atomes d'aluminium de la charpente de la zéolithe Y tout en maintenant le rapport atomique global Si/Al de la zéolithe traitée inchangée.

L'étape de traitement thermique en présence de vapeur d'eau peut avantageusement être répétée autant de fois qu'il est nécessaire pour obtenir la zéolithe Y convenant pour la mise en œuvre du support du catalyseur utilisé dans le procédé selon l'invention et possédant un paramètre cristallin a₀ de la maille élémentaire strictement supérieur à 24,50 Å.

L'étape de traitement thermique éventuellement en présence de vapeur d'eau est avantageusement suivie d'une étape d'attaque acide. Ladite attaque acide permet d'éliminer en partie ou en totalité les débris aluminiques issus de l'étape de traitement thermique en présence de vapeur d'eau et qui bouchent en partie la porosité de la zéolithe désaluminée ; l'attaque acide permet donc de déboucher la porosité de la zéolithe désaluminée.

L'attaque acide peut avantageusement être réalisée par mise en suspension de la zéolithe Y, qui a éventuellement subie préalablement un traitement thermique, dans une solution aqueuse contenant un acide minéral ou organique. L'acide minéral peut être l'acide nitrique, l'acide sulfurique, l'acide chlorhydrique, l'acide phosphorique ou l'acide borique. L'acide organique peut être l'acide formique, l'acide acétique, l'acide oxalique, l'acide tartrique, l'acide maléique, l'acide malonique, l'acide malique, l'acide lactique, ou tout autre acide organique soluble dans l'eau. La concentration de la solution en acide minéral ou organique dans la solution varie avantageusement entre 0,01 et 2,0 mol.L-1, et de préférence entre 0,5 et 1,0 mol.L-1. La température de l'étape d'attaque acide est avantageusement comprise entre 20 et 100 °C, de préférence entre 60 et 95 °C, de manière préférée entre 60 et 90 °C et de manière plus préférée entre 60 et 80 °C. La durée de l'attaque acide est avantageusement comprise entre 5 minutes et 8 heures, de préférence entre 30 minutes et 4 heures, et de manière préférée entre 1 heure et 2 heures.

À l'issue de la ou des étapes de traitement thermique éventuellement en présence de vapeur d'eau et éventuellement de l'étape d'attaque acide, le procédé de modification de ladite zéolithe Y comporte avantageusement une étape d'au moins un échange partiel ou total des cations alcalins et de préférence des cations Na+ encore présents en position cationique dans la zéolithe Y. L'étape d'échange ionique est réalisée de manière similaire à l'étape d'échange ionique décrite ci-dessus.

A l'issue de la ou des étapes de traitement thermique éventuellement en présence de vapeur d'eau et éventuellement de l'étape d'attaque acide et éventuellement de l'étape d'échange partiel ou total des cations alcalins et de préférence des cations Na+, le procédé de modification de ladite zéolithe Y peut comporter une étape de calcination. Ladite calcination permet d'éliminer les espèces organiques présentes au sein de la porosité de la zéolithe, par exemples celles apportées par l'étape d'attaque acide ou par l'étape d'échange partiel ou total des cations alcalins. De plus, ladite étape de calcination permet de générer la forme protonée de la zéolithe Y et de lui conférer une acidité en vue de ses applications.

La calcination peut avantageusement être réalisée en four à moufle ou en four tubulaire, sous air sec ou sous atmosphère inerte, en lit léché ou en lit traversé. La température de calcination est avantageusement comprise entre 200 et 800 °C, de préférence entre 450 et 600 °C, et de manière préférée entre 500 et 550 °C. La durée du palier de calcination est avantageusement comprise entre 1 et 20 heures, de préférence entre 6 et 15 heures, et de manière préférée entre 8 et 12 heures.

Ainsi, ladite zéolithe Y obtenue présente un paramètre cristallin a0 initial de la maille élémentaire compris entre 24,52 et 24,70 Å.

Ladite zéolithe Y obtenue présente avantageusement une surface spécifique mesurée par physisorption d'azote selon la méthode B.E.T. comprise entre 550 et 1000 m²/g, de préférence entre 600 et 900 m²/g, et de manière préférée entre 650 et 800 m²/g.

Selon l'invention, le support comprend également une zéolithe Béta.

La zéolithe Beta est généralement synthétisée à partir d'un mélange réactionnel contenant un agent structurant. L'utilisation d'agents structurants est bien connue de l'homme du métier : par exemple, le brevet US 3,308,069 décrit l'utilisation d'hydroxyde de tétraéthylammonium, et le brevet US 5,139,759 décrit l'utilisation du cation tétraéthylammonium dérivé d'un composé halogénure de tétraéthylammonium. Une autre méthode standard de préparation de la zéolithe Beta est indiquée dans l'ouvrage Verified Synthesis of Zeolitic Materials.

La zéolithe Beta utilisée dans le support selon l'invention présente de préférence un rapport atomique global SAR compris entre 10 et 100, préférentiellement entre 20 et 50, et de manière préférée entre 20 et 30. La zéolithe Beta utilisée dans le support selon l'invention présente avantageusement une surface spécifique mesurée par physisorption d'azote selon la méthode B.E.T. comprise entre 400 et 800 m²/g, de préférence entre 500 et 750 m²/g, et de manière préférée entre 550 et 700 m²/g.

De préférence, le support présente une teneur en zéolithe Beta comprise entre 5 et 15 et de manière préférée entre 7 et 14%, de préférence entre 8 et 12 %, par rapport au poids total dudit support.

De préférence, le support comprend et est de préférence constitué de :
- 35 à 70%, de préférence de 50 à 70%, et de manière préférée de 55 à 65%, en poids par rapport au poids total dudit support d'une zéolithe Y présentant un paramètre cristallin a0 initial de la maille élémentaire strictement supérieur à 24,50 Å ;
- de 5 à 15%, de préférence 7 à 14%, et de manière préférée de 8 à 12%pds en poids par rapport au poids total dudit support d'une zéolithe Beta ; et
- de 15 à 60% poids, de préférence entre 15% à 40% en poids, et de manière très préférée entre 20% et 40% en poids par rapport au poids total dudit support d'au moins une matrice minérale poreuse.

Conformément à l'invention, le rapport pondéral de ladite zéolithe Y sur ladite zéolithe Beta dans le catalyseur est compris entre 5 et 12.

De préférence, le rapport pondéral de ladite zéolithe Y sur ladite zéolithe Beta dans le catalyseur est compris entre 5 et 10, et de préférence entre 5 et 8.

De préférence, le catalyseur présente une teneur en zéolithe Y comprise entre 18 et 69% poids par rapport au poids total dudit catalyseur.

De préférence, ledit catalyseur présente une teneur en zéolithe Béta comprise entre 2 et 15 % poids par rapport au poids total dudit catalyseur.

De préférence, ledit catalyseur présente une teneur en au moins une matrice minérale poreuse comprise entre 8 et 59% poids par rapport au poids total dudit catalyseur.

Le catalyseur d'hydrocraquage selon l'invention présentant un rapport Y/beta compris dans ces gammes permet l'obtention d'une activité convertissante améliorée en coupes de point d'ébullition inférieur à 216°C (naphta et gaz) lorsque ledit catalyseur est utilisé dans un procédé d'hydrocraquage selon l'invention, comparativement aux catalyseurs de l'état de l'art c'est-à-dire qui présenteraient des teneurs ou rapports pondéraux différents et/ou une zéolithe à plus faible paramètre de maille.

### Préparation du catalyseur

Le catalyseur est avantageusement préparé selon les méthodes classiques utilisées dans l'art antérieur.

En particulier, le catalyseur est préparé selon un procédé de préparation comprenant :
- une étape de préparation du support comprenant :
   - le mélange d'au moins une matrice minérale poreuse avec une zéolithe Y présentant un paramètre cristallin initial a₀ de la maille élémentaire strictement supérieur à 24,50 Å et une zéolithe Beta, le rapport pondéral de ladite zéolithe Y sur ladite zéolithe Beta dans le catalyseur étant compris entre 5 et 12, de préférence compris entre 5 et 10 et de manière préférée entre 5 et 8, et
   - la mise en forme dudit mélange ;
- l'introduction d'au moins un élément hydro-déshydrogénant choisi dans le groupe formé par les éléments du groupe VIB de la classification périodique, de préférence le nickel et le cobalt, les éléments du groupe VIII non nobles de la classification périodique, de préférence le fer, le cobalt, le nickel, et leurs mélanges, et de manière préférée le nickel et le cobalt, et leurs mélanges, sur le support par :
   - addition d'au moins un précurseur dudit élément lors de la mise en forme de façon à introduire au moins une partie dudit élément,
   - imprégnation du support avec au moins un précurseur dudit élément,
- éventuellement une étape de séchage et/ou de calcination à l'issue de la préparation du support et/ou de l'étape d'introduction d'au moins un élément hydro-déshydrogénant.

Plus particulièrement, le catalyseur est préparé selon un procédé de préparation comprenant les étapes suivantes :
a) préparation de la zéolithe Y présentant la caractéristique cristallographique spécifique revendiquée selon le procédé décrit ci-dessus,
b) préparation de la zéolithe Beta
c) mélange avec une matrice minérale poreuse et mise en forme pour obtenir le support,
d) introduction d'au moins un élément hydro-déshydrogénant sur le support par l'une au moins des méthodes suivantes :
   - addition d'au moins un précurseur dudit élément lors de la mise en forme de façon à introduire au moins une partie dudit élément,
   - imprégnation du support avec au moins un précurseur dudit élément hydro-déshydrogénant,

Eventuellement séchage et/ou calcination des produits obtenus à l'issue de chacune des étapes de préparation a) ou b) ou c) ou d).

Le support peut avantageusement être mis en forme par toute technique connue de l'homme du métier. La mise en forme peut être réalisée par exemple par extrusion, par pastillage, par la méthode de coagulation en goutte (oil-drop), par granulation au plateau tournant ou par toute autre méthode bien connue de l'homme du métier.

Le support est de préférence mis en forme sous la forme de grains de différentes formes et dimensions. Ils sont utilisés en général sous la forme d'extrudés cylindriques ou polylobes tels que, trilobes, quadrilobes ou polylobes de forme droite ou torsadée, mais peuvent éventuellement être fabriqués et employés sous la forme de poudres concassées, de tablettes, d'anneaux, de billes, de roues. Il est toutefois avantageux que le catalyseur se présente sous forme d'extrudés d'un diamètre compris entre 0,5 et 5 mm et plus particulièrement entre 0,7 et 3 mm et de façon encore plus particulière entre 1,0 et 2,5 mm. Les formes sont cylindriques (qui peuvent être creuses ou non), cylindriques torsadés, multilobées (2, 3, 4 ou 5 lobes par exemple), anneaux. Toute autre forme peut être utilisée.

Une des méthodes préférées de mise en forme consiste à co-malaxer lesdites zéolithes avec le liant, de préférence d'alumine, sous forme de gel humide pendant quelques dizaines de minutes, de préférence entre 10 et 40 minutes, puis à passer la pâte ainsi obtenue à travers une filière pour former des extrudés de diamètre compris de préférence entre 0,5 et 5 mm.

Selon une autre des méthodes préférées de mise en forme, lesdites zéolithes peuvent être introduites au cours de la synthèse de la matrice minérale poreuse. Par exemple, selon ce mode préféré de la présente invention, lesdites zéolithes Y et Beta sont ajoutées au cours de la synthèse d'une matrice minérale poreuse, telle que par exemple une matrice silico-aluminique : dans ce cas, lesdites zéolithes peuvent être avantageusement ajoutées à un mélange composé d'un composé d'alumine en milieu acide avec un composé de silice totalement soluble.

L'introduction des éléments du groupe VIB et/ou VIII peut avoir lieu éventuellement lors de l'étape de mise en forme, par addition d'au moins un composé dudit élément, de façon à introduire au moins une partie dudit élément.

L'introduction d'au moins un élément hydro-déshydrogénant peut avantageusement être accompagnée de celle d'au moins un élément promoteur choisi parmi le phosphore, bore, silicium et de préférence le phosphore et éventuellement de l'introduction d'un élément du groupe VIIA et/ou VB. Le solide mis en forme est éventuellement séché à une température comprise entre 60 et 250 °C et éventuellement calciné à une température de 250 à 800 °C pendant une durée comprise entre 30 minutes et 6 heures.

L'étape d'introduction d'au moins un élément hydro-déshydrogénant est avantageusement réalisée par une méthode bien connue de l'homme du métier, en particulier par une ou plusieurs opérations d'imprégnation du support mis en forme et calciné ou séché, et de préférence calciné, par une solution contenant les précurseurs des éléments du groupe VIB et/ou VIII, éventuellement le précurseur d'au moins un élément promoteur et éventuellement le précurseur d'au moins un élément du groupe VIIA et/ou du groupe VB.

De manière préférée, ladite étape d) est réalisée par une méthode d'imprégnation à sec par une solution contenant les précurseurs de la fonction hydro/déshydrogénante, c'est-à-dire des éléments du groupe VIB et/ou VIII, éventuellement suivi d'une étape de séchage et de préférence sans étape de calcination.

Dans le cas où le catalyseur de la présente invention contient un métal non noble du groupe VIII, les métaux du groupe VIII sont de préférence introduits par une ou plusieurs opérations d'imprégnation du support mis en forme et calciné, après ceux du groupe VIB ou en même temps que ces derniers.

L'introduction d'au moins un élément hydro-déshydrogénant peut ensuite être éventuellement suivie d'un séchage à une température comprise entre 60 et 250 °C et éventuellement d'une calcination à une température comprise entre 250 et 800 °C.

Les sources de molybdène et de tungstène sont avantageusement choisies parmi les oxydes et les hydroxydes, les acides molybdiques et tungstiques et leurs sels en particulier les sels d'ammonium tels que le molybdate d'ammonium, l'heptamolybdate d'ammonium, le tungstate d'ammonium, l'acide phosphomolybdique, l'acide phosphotungstique et leurs sels, l'acide silicomolybdique, l'acide silicotungstique et leurs sels. On utilise de préférence les oxydes et les sels d'ammonium tels que le molybdate d'ammonium, l'heptamolybdate d'ammonium et le tungstate d'ammonium.

Les sources d'éléments du groupe VIII non nobles qui peuvent être utilisées sont bien connues de l'homme du métier. Par exemple, pour les métaux non nobles on utilisera les nitrates, les sulfates, les hydroxydes, les phosphates, les halogénures comme par exemple les chlorures, les bromures et les fluorures, les carboxylates comme par exemple les acétates et les carbonates.

La source de phosphore préférée est l'acide orthophosphorique H₃PO₄, mais ses sels et esters comme les phosphates d'ammonium conviennent également. Le phosphore peut par exemple être introduit sous la forme d'un mélange d'acide phosphorique et d'un composé organique basique contenant de l'azote tel que l'ammoniaque, les amines primaires et secondaires, les amines cycliques, les composés de la famille de la pyridine et des quinoléines et les composés de la famille du pyrrole. Les acides tungsto-phosphorique ou tungsto-molybdique peuvent être employés.

La teneur en phosphore est ajustée, sans que cela ne limite la portée de l'invention, de telle manière à former un composé mixte en solution et/ou sur le support, par exemple tungstène-phosphore ou molybdène-tungstène-phosphore. Ces composés mixtes peuvent être des hétéropolyanions. Ces composés peuvent être des hétéropolyanions d'Anderson, par exemple.

La source de bore peut être l'acide borique, de préférence l'acide orthoborique H₃BO₃, le biborate ou le pentaborate d'ammonium, l'oxyde de bore, les esters boriques. Le bore peut par exemple être introduit sous la forme d'un mélange d'acide borique, d'eau oxygénée et un composé organique basique contenant de l'azote tel que l'ammoniaque, les amines primaires et secondaires, les amines cycliques, les composés de la famille de la pyridine et des quinoléines et les composés de la famille du pyrrole. Le bore peut être introduit par exemple par une solution d'acide borique dans un mélange eau-alcool.

De nombreuses sources de silicium peuvent être employées. Ainsi, on peut utiliser l'orthosilicate d'éthyle Si(OEt)₄, les siloxanes, les polysiloxanes, les silicones, les émulsions de silicones, les silicates d'halogénures comme le fluorosilicate d'ammonium (NH₄)₂SiF₆ ou le fluorosilicate de sodium Na₂SiF₆. L'acide silicomolybdique et ses sels, l'acide silicotungstique et ses sels peuvent également être avantageusement employés. Le silicium peut être ajouté par exemple par imprégnation de silicate d'éthyle en solution dans un mélange eau-alcool. Le silicium peut être ajouté par exemple par imprégnation d'un composé du silicium de type silicone ou l'acide silicique mis en suspension dans l'eau.

Les sources d'éléments du groupe VB qui peuvent être utilisées sont bien connues de l'homme du métier. Par exemple, parmi les sources de niobium, on peut utiliser les oxydes, tel que le pentaoxyde de diniobium Nb₂O₅, l'acide niobique Nb₂O₅.H₂O, les hydroxydes de niobium et les polyoxoniobates, les alkoxydes de niobium de formule Nb(OR₁)₃ où R1 est un radical alkyle, l'oxalate de niobium NbO(HC₂O₄)₅, le niobate d'ammonium. On utilise de préférence l'oxalate de niobium ou le niobate d'ammonium.

Les sources d'éléments du groupe VIIA qui peuvent être utilisées sont bien connues de l'homme du métier. Par exemple, les anions fluorures peuvent être introduits sous forme d'acide fluorhydrique ou de ses sels. Ces sels sont formés avec des métaux alcalins, l'ammonium ou un composé organique. Dans ce dernier cas, le sel est avantageusement formé dans le mélange réactionnel par réaction entre le composé organique et l'acide fluorhydrique. Il est également possible d'utiliser des composés hydrolysables pouvant libérer des anions fluorures dans l'eau, comme le fluorosilicate d'ammonium (NH₄)₂SiF₆, le tétrafluorure de silicium SiF₄ ou de sodium Na₂SiF₆. Le fluor peut être introduit par exemple par imprégnation d'une solution aqueuse d'acide fluorhydrique ou de fluorure d'ammonium.

### Procédé d'hydrocraquage

Le catalyseur selon l'invention est alors avantageusement mis en œuvre dans un procédé d'hydrocraquage en particulier de production de naphta. Le catalyseur mis en œuvre dans un procédé d'hydrocraquage, comme le procédé selon l'invention, peut être avantageusement sous forme sulfurée. Les métaux du groupe VIB et/ou du groupe VIII non nobles dudit catalyseur sont donc présents sous forme sulfurée.

Les catalyseurs utilisés dans les procédés selon la présente invention sont alors avantageusement soumis préalablement à un traitement de sulfuration permettant de transformer, au moins en partie, les espèces métalliques en forme sulfurée avant leur mise en contact avec la charge à traiter. Ce traitement d'activation par sulfuration est bien connu de l'homme du métier et peut être effectué par toute méthode déjà décrite dans la littérature soit in-situ, c'est-à-dire dans le réacteur, soit ex-situ.

Une méthode de sulfuration classique bien connue de l'homme du métier consiste à chauffer le catalyseur en présence d'hydrogène sulfuré (pur ou par exemple sous flux d'un mélange d'hydrogène-hydrogène sulfuré) à une température comprise entre 150 et 800 °C, de préférence entre 250 et 600 °C, généralement dans une zone réactionnelle à lit traversé.

Un autre objet de la présente invention a également pour objet un procédé d'hydrocraquage d'au moins une charge hydrocarbonée, de préférence sous forme liquide, dont au moins 50% poids des composés présentent un point d'ébullition initial supérieur à 300°C et un point d'ébullition final inférieur à 650°C, à une température comprise entre 200°C et 480°C, à une pression totale comprise entre 1 MPa et 25 MPa, avec un ratio volume d'hydrogène par volume de charge hydrocarbonée compris entre 80 et 5000 litres par litre et à une Vitesse Volumique Horaire (VVH) définie par le rapport du débit volumique de charge hydrocarbonée, de préférence liquide, par le volume de catalyseur chargé dans le réacteur comprise entre 0,1 et 50 h-1, en présence du catalyseur selon l'invention.

De manière avantageuse, le catalyseur selon l'invention est utilisé dans le procédé d'hydrocraquage selon l'invention après une section dite de prétraitement contenant un ou plusieurs catalyseur(s) d'hydrotraitement pouvant être tout catalyseur connu de l'Homme du métier et qui permet de réduire la teneur en certains contaminants de la charge (voir ci-après) tels que l'azote, le soufre ou les métaux. Les conditions d'opération (VVH, température, pression, débit d'hydrogène, liquide, configuration réactionnelle etc..) de cette section dite de prétraitement peuvent être diverses et variées en accord avec le savoir de l'Homme du métier.

### Charges

Des charges très variées peuvent être traitées par les procédés d'hydrocraquage selon l'invention. La charge mise en œuvre dans le procédé d'hydrocraquage selon l'invention est une charge hydrocarbonée dont au moins 50% poids des composés présentent un point d'ébullition initial supérieur à 300°C et un point d'ébullition final inférieur à 650°C, de préférence dont au moins 60% poids, de manière préférée dont au moins 75% poids et de manière plus préférée dont au moins 80% poids des composés, présentent un point d'ébullition initial supérieur à 300°C et un point d'ébullition final inférieur à 650°C.

La charge est avantageusement choisie parmi les LCO (Light Cycle Oil, gazoles légers issus d'une unité de craquage catalytique), les distillats atmosphériques, les distillats sous vide tels que par exemple gasoils issus de la distillation directe du brut ou d'unités de conversion telles que le FCC, le coker ou la viscoréduction, les charges provenant d'unités d'extraction d'aromatiques des bases d'huile lubrifiante ou issues du déparaffinage au solvant des bases d'huile lubrifiante, les distillats provenant de procédés de désulfuration ou d'hydroconversion en lit fixe ou en lit bouillonnant de RAT (résidus atmosphériques) et/ou de RSV (résidus sous vide) et/ou d'huiles désasphaltées, et les huiles désasphaltées, les paraffines issues du procédé Fischer-Tropsch, prises seules ou en mélange. On peut citer des charges d'origines renouvelables (telles que huiles végétales, graisses animales, huile de conversion hydrothermale ou de pyrolyse de la biomasse lignocellulosique) ainsi que des huiles de pyrolyse de plastique. La liste ci-dessus n'est pas limitative. Lesdites charges ont de préférence un point d'ébullition T5 supérieur à 300°C, de préférence supérieur à 340°C, c'est à dire que 95% des composés présents dans la charge ont un point d'ébullition supérieur à 300°C, et de manière préférée supérieur à 340°C.

La teneur en azote des charges traitées dans les procédés selon l'invention est avantageusement supérieure à 500 ppm poids, de préférence comprise entre 500 et 10000 ppm poids, de manière plus préférée entre 700 et 4000 ppm poids et de manière encore plus préférée entre 1000 et 4000 ppm poids. La teneur en soufre des charges traitées dans les procédés selon l'invention est avantageusement comprise entre 0,01 et 5% poids, de manière préférée comprise entre 0,2 et 4% poids et de manière encore plus préférée entre 0,5 et 3 % poids.

La charge peut éventuellement contenir des métaux. La teneur cumulée en nickel et vanadium des charges traitées dans les procédés selon l'invention est de préférence inférieure à 1 ppm poids.

La charge peut éventuellement contenir des asphaltènes. La teneur en asphaltènes est généralement inférieure à 3000 ppm poids, de manière préférée inférieure à 1000 ppm poids, de manière encore plus préférée inférieure à 200 ppm poids.

De manière avantageuse, lorsque le catalyseur selon l'invention est mis en œuvre après une section d'hydrotraitement telle que décrite précédemment, la teneur en azote, soufre, métaux ou asphaltènes du liquide injecté dans le procédé selon l'invention mettant en œuvre le catalyseur selon l'invention se voit réduite. De manière préférée, la teneur en azote organique de la charge traitée dans le procédé d'hydrocraquage selon l'invention est alors comprise, après hydrotraitement, entre 0 et 200 ppm, de préférence entre 0 et 50 ppm, et de manière encore plus préférée entre 0 et 30 ppm. La teneur en soufre est de préférence inférieure à 1000 ppm et celle en asphaltène est de préférence inférieure à 200 ppm alors que la teneur en métaux (Ni ou V) est inférieure à 1 ppm.

Le procédé d'hydrocraquage selon l'invention peut comprendre une étape de fractionnement entre le prétraitement de la charge et le ou les réacteur(s) d'hydrocraquage mettant en œuvre le catalyseur selon l'invention. Dans le cas préféré où le procédé d'hydrocraquage est opéré sans fractionnement (gaz et liquide) entre le prétraitement et le ou les réacteur(s) d'hydrocraquage mettant en œuvre le catalyseur selon l'invention, l'azote et le soufre éliminé du liquide après le prétraitement se trouvent injectés sous la forme de NH₃ et d'H₂S dans le(s) réacteur(s) contenant le catalyseur selon l'invention.

Conformément à l'invention, le procédé d'hydrocraquage de ladite charge hydrocarbonée selon l'invention est mis en œuvre à une température comprise entre 200°C et 480°C, à une pression totale comprise entre 1 MPa et 25 MPa, avec un ratio volume d'hydrogène par volume de charge hydrocarbonée compris entre 80 et 5000 litres par litre et à une Vitesse Volumique Horaire (VVH) définie par le rapport du débit volumique de charge hydrocarbonée par le volume de catalyseur chargé dans le réacteur comprise entre 0,1 et 50 h-1.

De préférence, le procédé d'hydrocraquage selon l'invention opère en présence d'hydrogène, à une température comprise entre 250 et 480°C, de manière préférée entre 320 et 450°C, de manière très préférée entre 330 et 435°C, sous une pression comprise entre 2 et 25 MPa, de manière préférée entre 3 et 20 MPa, à la vitesse spatiale comprise entre 0,1 et 20 h-1, de préférence 0,1 et 6 h-1, de manière préférée entre 0,2 et 3 h-1, et la quantité d'hydrogène introduite est telle que le rapport volumique litre d'hydrogène/litre d'hydrocarbure est compris entre 100 et 2000 L/L.

Le procédé peut être conduit en une étape ou deux étapes selon le niveau de conversion de la charge visée, avec ou sans recyclage de la fraction non convertie. Le catalyseur selon l'invention peut être utilisé de manière non limitative dans l'une ou les deux étapes du procédé d'hydrocraquage, seul ou en combinaison avec un autre catalyseur d'hydrocraquage.

Ces conditions opératoires utilisées dans les procédés selon l'invention permettent généralement d'atteindre des conversions par passe, en produits ayant des points d'ébullition inférieurs à 340°C, et mieux inférieurs à 370°C, supérieures à 15%pds et de manière encore plus préférée comprises entre 20 et 100%pds.

Les exemples illustrent l'invention sans en limiter la portée.

### EXEMPLES

### Exemple 1 - Préparation d'un catalyseur A comparatif

Le support du catalyseur A est préparé par mise en forme par malaxage-extrusion de 60% poids de zéolithe Y commerciale (zéolithe CBV712 de Zeolyst) ayant un paramètre de maille de 24,35 Å, un rapport SiO₂/Al₂O₃ molaire de 12, une surface spécifique mesurée par physisorption d'azote selon la méthode B.E.T. de 850 m²/g, 10% poids de zéolithe Beta commerciale (zéolithe CP814e de Zeolyst) ayant un rapport SiO₂/Al₂O₃ molaire de 25, une surface spécifique mesurée par physisorption d'azote selon la méthode B.E.T. de 670 m²/g, en présence de boehmite commerciale (Pural SB3 de SASOL). Les extrudés obtenus sont séchés à 80°C puis calcinés à 600°C sous air humide (5%poids d'eau par kg d'air sec). Le support calciné comprend, sur base sèche, 60% poids de zéolithe Y, 10% poids de zéolithe Beta et 30% poids d'alumine, soit un rapport pondéral Y/Beta = 6 dans le catalyseur.

Le catalyseur A est préparé par imprégnation à sec du support ainsi obtenu à l'aide d'une solution aqueuse contenant les éléments Ni, Mo. Cette solution est obtenue par dissolution des précurseurs suivants dans l'eau : nitrate de nickel, et heptamolybdate d'ammonium. La quantité de précurseurs en solution est ajustée en fonction des concentrations ciblées sur le catalyseur final. Après imprégnation à sec, le catalyseur est séché à 120°C sous air.

Les pourcentages massiques dans le catalyseur sont respectivement : 15,1% poids de molybdène (sous forme MoO₃), 3,3% poids de nickel (sous forme NiO) sur base sèche.

### Exemple 2 - Préparation d'un catalyseur B comparatif

Le support du catalyseur B est préparé par mise en forme par malaxage-extrusion de 60% poids de zéolithe Y ayant un paramètre de maille de 24,42 Å, un rapport SiO₂/Al₂O₃ molaire de 5,2, une surface spécifique mesurée par physisorption d'azote selon la méthode B.E.T. de 800 m²/g, et 10% poids de zéolithe Beta commerciale (zéolithe CP814e de Zeolyst) ayant un rapport SiO₂/Al₂O₃ molaire de 25, une surface spécifique mesurée par physisorption d'azote selon la méthode B.E.T. de 670 m²/g, en présence de boehmite commerciale (Pural SB3). Les extrudés obtenus sont séchés à 80°C puis calcinés à 600°C sous air humide (5% poids d'eau par kg d'air sec). Le support calciné comprend, sur base sèche, 60% poids de zéolithe Y, 10% poids de zéolithe Beta et 30% poids d'alumine soit un rapport pondéral Y/Beta = 6 dans le catalyseur.

Le catalyseur B est préparé par imprégnation à sec du support ainsi obtenu à l'aide d'une solution aqueuse contenant les éléments Ni, Mo. Cette solution est obtenue par dissolution des précurseurs suivants dans l'eau : nitrate de nickel, et heptamolybdate d'ammonium. La quantité de précurseurs en solution est ajustée en fonction des concentrations ciblées sur le catalyseur final. Après imprégnation à sec, le catalyseur est séché à 120°C sous air.

Les pourcentages massiques dans le catalyseur sont respectivement : 15,1% poids de molybdène (sous forme MoO₃), 3,3% poids de nickel (sous forme NiO) sur base sèche.

### Exemple 3 - Préparation d'un catalyseur C selon l'invention

Le support du catalyseur C est préparé par mise en forme par malaxage-extrusion de 60% poids de zéolithe Y ayant un paramètre de maille de 24,54 Å, un rapport SiO₂/Al₂O₃ molaire de 5,2, une surface spécifique mesurée par physisorption d'azote selon la méthode B.E.T. de 830 m²/g, et 10% poids de zéolithe Beta commerciale CP814e ayant un rapport SiO₂/Al₂O₃ molaire de 25, une surface spécifique mesurée par physisorption d'azote selon la méthode B.E.T. de 670 m²/g, en présence de boehmite commerciale Pural SB3. Les extrudés obtenus sont séchés à 80°C puis calcinés à 600°C sous air humide (5% poids d'eau par kg d'air sec). Le support calciné comprend, sur base sèche, 60% poids de zéolithe Y, 10% poids de zéolithe Beta et 30% poids d'alumine soit un rapport pondéral Y/Beta = 6 dans le catalyseur.

Le catalyseur C est préparé par imprégnation à sec du support ainsi obtenu à l'aide d'une solution aqueuse contenant les éléments Ni, Mo. Cette solution est obtenue par dissolution des précurseurs suivants dans l'eau : nitrate de nickel, et heptamolybdate d'ammonium. La quantité de précurseurs en solution est ajustée en fonction des concentrations ciblées sur le catalyseur final. Après imprégnation à sec, le catalyseur est séché à 120°C sous air.

Les pourcentages massiques dans le catalyseur sont respectivement : 15,1% poids de molybdène (sous forme MoO₃), 3,3% poids de nickel (sous forme NiO).

### Exemple 4

Les performances des catalyseurs décrits précédemment sont évaluées en hydrocraquage d'une charge comprenant une fraction distillats sous vide et gazole en une étape à l'aide d'une unité pilote de test isotherme en configuration downflow.

Cette charge de test subit un hydrotraitement (HDT). Après cette étape d'hydrotraitement, la charge de test présente une densité à 15°C de 0,8755 g/mL, une teneur résiduelle en azote de 23 ppm pds et une teneur résiduelle en soufre de 16 ppm pds. Le point initial de la distillation simulée pour cette charge de test après hydrotraitement est de 163,3°C et le point final de 578,7°C. Le point à 50%pds de la distillation simulée est à 391,7°C. Afin de simuler la pression partielle d'hydrogène sulfuré et d'ammoniac généré par l'étape d'HDT du procédé, la charge de test est additivé respectivement de DMDS et d'aniline de manière à obtenir 8820 ppm pds de soufre et 1900 ppm pds d'azote dans la charge additivée finale.

Chaque catalyseur est évalué séparément et est sulfuré préalablement au test d'hydrocraquage sous charge SRGO ou gazole straight run c'est-à-dire gazole issue de la distillation directe du pétrole additivée de 4% poids de diméthylsulfure (DMDS) et 2% poids d'aniline. La sulfuration est conduite à VVH de 2 h-1 (VVH = Vitesse Volumique Horaire), un rapport volumique H₂/charge de 1000 NL/L, une pression totale de 140 bar (soit 14,0 MPa) et une température de palier de 350°C pendant 6 heures.

Après sulfuration, les conditions opératoires sont ajustées à celles utilisées pour le test d'hydrocraquage : VVH de 1,5 h-1, un rapport volumique H₂/charge de 1000 NL/L, une pression totale de 140 bar (soit 14,0 MPa). La température des réacteurs est ajustée de manière à cibler une conversion nette de la fraction 216°C+ de 65% poids après 150 heures sous charge.

La conversion nette est définie comme le rendement en coupe (ou fraction) de point d'ébullition inférieure à 216°C moins le rendement en coupe de point d'ébullition inférieure à 216°C présente dans la charge de test.

Les performances des catalyseurs sont comparées à celle du catalyseur B pris comme référence et reportées dans le Tableau 1.

L'activité relative en degré Celsius (°C) est obtenue par différence des températures entre le catalyseur B référence et celle obtenue pour le catalyseur à évaluer pour obtenir une conversion nette de 65%. Le rendement relatif en coupe 68-216°C est pris par différence entre le rendement du catalyseur à évaluer et celui du catalyseur B référence obtenus dans les 2 cas à une conversion nette de 65%pds de la coupe 216°C+. Une valeur positive induit une activité ou un rendement supérieur.

Une valeur positive induit une activité ou un rendement supérieur.

**Tableau 1**

| Catalyseurs | Paramètre de maille Y (Å) | Rapport massique Y/Beta | Y (%pds par rapport au support) | Beta (%pds par rapport au support) | Activité relative (°C) | Rendement relatif (%pds) |
|---|---|---|---|---|---|---|
| A (comparatif) | 24,35 | 6 | 60 | 10 | -9 | -0,5 |
| B (comparatif) | 24,42 | 6 | 60 | 10 | 0 | 0 |
| C (selon l'invention) | 24,54 | 6 | 60 | 10 | 2 | 0 |

Tableau1. Caractéristiques et positionnement des performances des catalyseurs A, B et C.

Les résultats reportés dans le Tableau ci-dessus montrent que le catalyseur C selon l'invention présentant la combinaison de zéolithe Y et Beta à ratio massique de 6 et un paramètre de maille de la zéolithe Y de 24,54 Å permet l'obtention d'un gain d'activité convertissante de la coupe de point d'ébullition supérieur à 216°C en coupes de point d'ébullition inférieur à 216°C (naphta et gaz) par rapport aux catalyseurs comparatifs A et B, ces derniers utilisant une zéolithe Y ayant un paramètre de maille plus faible à iso rapport Y/Beta, et sans perte de sélectivité ou rendement en coupe naphta.

Le catalyseur C présente même une légère amélioration du rendement en coupe naphta par rapport au catalyseur A.

## Revendications

1. Catalyseur d'hydrocraquage comprenant au moins un élément hydro-déshydrogénant choisi dans le groupe formé par les éléments du groupe VIB et du groupe VIII non nobles de la classification périodique, pris seuls ou en mélange, et un support comprenant au moins une matrice minérale poreuse, une zéolithe Y présentant un paramètre cristallin initial a₀ de la maille élémentaire compris entre 24,52 et 24,70Å, et une zéolithe Beta, dans lequel le rapport pondéral de ladite zéolithe Y sur ladite zéolithe Beta dans le catalyseur est compris entre 5 et 12.

2. Catalyseur selon la revendication 1 dans lequel les éléments du groupe VIII sont choisis parmi le fer, le cobalt, le nickel, pris seuls ou en mélange et de manière préférée parmi le nickel et le cobalt, la teneur en élément du groupe VIII étant comprise entre 0,5 et 8% en poids d'oxyde, de manière préférée entre 0,5 et 6% en poids d'oxyde et de manière très préférée entre 1,0 et 4% en poids d'oxyde, par rapport au poids total dudit catalyseur.

3. Catalyseur selon l'une des revendications 1 ou 2 dans lequel les éléments du groupe VIB sont choisis parmi le tungstène et le molybdène, pris seuls ou en mélange, la teneur en élément du groupe VIB étant comprise entre 1 et 30% en poids d'oxyde, de manière préférée entre 2 et 25% en poids d'oxyde, de manière très préférée entre 5 et 20% en poids d'oxyde, et de manière encore plus préférée entre 5 et 16% en poids d'oxyde, par rapport au poids total dudit catalyseur.

4. Catalyseur selon l'une des revendications 1 à 3 dans lequel le catalyseur contient du phosphore, la teneur en phosphore étant comprise entre 0,5 et 10% en poids d'oxyde P₂O₅, de manière préférée comprise entre 1,0 et 6% en poids d'oxyde P₂O₅ et de manière plus préférée entre 1,0 et 4% en poids d'oxyde P₂O₅, par rapport au poids total dudit catalyseur.

5. Catalyseur selon l'une des revendications 1 à 4 dans lequel le paramètre cristallin initial a₀ de la maille élémentaire de la zéolithe Y est compris entre 24,52 Å et 24,65 Å, de manière préférée compris entre 24,52 Å et 24,60 Å et de manière très préférée compris entre 24,52 Å et 24,58 Å.

6. Catalyseur selon l'une des revendications 1 à 5 dans lequel le catalyseur présente une teneur en zéolithe Y comprise entre 18 et 69% poids par rapport au poids total dudit catalyseur.

7. Catalyseur selon l'une des revendications 1 à 6 dans lequel ledit catalyseur présente une teneur en zéolithe Béta comprise entre 2 et 15 % poids par rapport au poids total dudit catalyseur.

8. Catalyseur selon l'une des revendications 1 à 7 dans lequel ledit catalyseur présente une teneur en au moins une matrice minérale poreuse comprise entre 8 et 59% poids par rapport au poids total dudit catalyseur.

9. Catalyseur selon l'une des revendications 1 à 8 dans lequel le rapport pondéral de ladite zéolithe Y sur ladite zéolithe Beta dans le catalyseur est compris entre 5 et 10 et de manière préférée entre 5 et 8,

10. Procédé d'hydrocraquage d'au moins une charge hydrocarbonée dont au moins 50% poids des composés présentent un point d'ébullition initial supérieur à 300°C et un point d'ébullition final inférieur à 650°C, à une température comprise entre 200°C et 480°C, à une pression totale comprise entre 1 MPa et 25 MPa, avec un ratio volume d'hydrogène par volume de charge hydrocarbonée compris entre 80 et 5000 litres par litre et à une Vitesse Volumique Horaire (VVH) définie par le rapport du débit volumique de charge hydrocarbonée par le volume de catalyseur chargé dans le réacteur comprise entre 0,1 et 50 h-1, en présence du catalyseur selon l'une des revendications 1 à 9.

## Patentansprüche

1. Katalysator zum Hydrocracken, umfassend mindestens ein hydrierendes/dehydrierendes Element, das aus der Gruppe ausgewählt ist, die aus den Elementen der Gruppe VIB und der Gruppe VIII unedler Art des Periodensystems, allein oder in Mischung, gebildet wird, und einen Träger, der mindestens eine poröse mineralische Matrix, einen Zeolithen Y, welcher einen anfänglichen Gitterparameter a₀ der Elementarzelle zwischen 24,52 und 24,70 Å aufweist, und einen Zeolithen Beta umfasst, wobei das Gewichtsverhältnis des Zeolithen Y zum Zeolithen Beta in dem Katalysator zwischen 5 und 12 beträgt.

2. Katalysator nach Anspruch 1, wobei die Elemente der Gruppe VIII aus Eisen, Kobalt, Nickel, allein oder in Mischung, und vorzugsweise aus Nickel und Kobalt ausgewählt sind, wobei der Gehalt an Element der Gruppe VIII zwischen 0,5 und 8 Gewichts-% Oxid, vorzugsweise zwischen 0,5 und 6 Gewichts-% Oxid und auf stark bevorzugte Weise zwischen 1,0 und 4 Gewichts-% Oxid, bezogen auf das Gesamtgewicht des Katalysators, beträgt.

3. Katalysator nach einem der Ansprüche 1 oder 2, wobei die Elemente der Gruppe VIB aus Wolfram und Molybdän, allein oder in Mischung, ausgewählt sind, wobei der Gehalt an Element der Gruppe VIB zwischen 1 und 30 Gewichts-% Oxid, vorzugsweise zwischen 2 und 25 Gewicht-% Oxid, auf stark bevorzugte Weise zwischen 5 und 20 Gewichts-% Oxid und noch stärker bevorzugt zwischen 5 und 16 Gewichts-% Oxid, bezogen auf das Gesamtgewicht des Katalysators, beträgt.

4. Katalysator nach einem der Ansprüche 1 bis 3, wobei der Katalysator Phosphor enthält, wobei der Gehalt an Phosphor zwischen 0,5 und 10 Gewichts-% Oxid P₂O₅, vorzugsweise zwischen 1,0 und 6 Gewichts-% Oxid P₂O₅ und noch bevorzugter zwischen 1,0 und 4 Gewichts-% Oxid P₂O₅, bezogen auf das Gesamtgewicht des Katalysators, beträgt.

5. Katalysator nach einem der Ansprüche 1 bis 4, wobei der anfängliche Gitterparameter a₀ der Elementarzelle des Zeolithen Y zwischen 24,52 Å und 24,65 Å, vorzugsweise zwischen 24,52 Å und 24,60 Å und auf stark bevorzugte Weise zwischen 24,52 Å und 24,58 Å beträgt.

6. Katalysator nach einem der Ansprüche 1 bis 5, wobei der Katalysator einen Gehalt an Zeolith Y zwischen 18 und 69 Gewichts-% bezogen auf das Gesamtgewicht des Katalysators aufweist.

7. Katalysator nach einem der Ansprüche 1 bis 6, wobei der Katalysator einen Gehalt an Zeolith Beta zwischen 2 und 15 Gewichts-% bezogen auf das Gesamtgewicht des Katalysators aufweist.

8. Katalysator nach einem der Ansprüche 1 bis 7, wobei der Katalysator einen Gehalt an mindestens einer porösen mineralischen Matrix zwischen 8 bis 59 Gewichts-% bezogen auf das Gesamtgewicht des Katalysators aufweist.

9. Katalysator nach einem der Ansprüche 1 bis 8, wobei das Gewichtsverhältnis des Zeolithen Y zum Zeolithen Beta in dem Katalysator zwischen 5 und 10 und vorzugsweise zwischen 5 und 8 beträgt.

10. Verfahren zum Hydrocracken mindestens eines kohlenwasserhaltigen Einsatzmaterials, von dem mindestens 50 Gewichts-% der Verbindungen einen anfänglichen Siedepunkt über 300 °C und einen Endsiedepunkt unter 650 °C aufweisen, bei einer Temperatur zwischen 200 °C und 480 °C, bei einem Gesamtdruck zwischen 1 MPa und 25 Mpa, mit einem Verhältnis vom Wasserstoffvolumen zum Volumen des kohlenstoffhaltigen Einsatzmaterials zwischen 80 und 5000 Litern pro Liter und bei einer Raumgeschwindigkeit (GSHV), definiert durch das Verhältnis des Volumenstroms des kohlenwasserstoffhaltigen Einsatzmaterials zum Volumen des in den Reaktor gegebenen Katalysators, zwischen 0,1 und 50 h-1, in Gegenwart des Katalysators nach einem der Ansprüche 1 bis 9.

## Claims

1. Hydrocracking catalyst comprising at least one hydrogenating-dehydrogenating element chosen from the group formed by the elements of group VIB and the non-noble elements of group VIII of the periodic table, taken alone or as a mixture, and a support comprising at least one porous mineral matrix, a zeolite Y having an initial lattice parameter a₀ of the unit cell of between 24.52 Å and 24.70 Å, and a zeolite beta, in which the weight ratio of said zeolite Y to said zeolite beta in the catalyst is between 5 and 12.

2. Catalyst according to Claim 1, in which the group VIII elements are chosen from iron, cobalt, nickel, taken alone or as a mixture and preferably from nickel and cobalt, the content of group VIII element being between 0.5% and 8% by weight of oxide, preferably between 0.5% and 6% by weight of oxide and very preferably between 1.0% and 4% by weight of oxide, relative to the total weight of said catalyst.

3. Catalyst according to either of Claims 1 and 2, in which the group VIB elements are chosen from tungsten and molybdenum, taken alone or as a mixture, the content of group VIB element being between 1% and 30% by weight of oxide, preferably between 2% and 25% by weight of oxide, very preferably between 5% and 20% by weight of oxide, and even more preferably between 5% and 16% by weight of oxide, relative to the total weight of said catalyst.

4. Catalyst according to one of Claims 1 to 3, in which the catalyst contains phosphorus, the phosphorus content being between 0.5% and 10% by weight of P₂O₅ oxide, preferably between 1.0% and 6% by weight of P₂O₅ oxide and more preferably between 1.0% and 4% by weight of P₂O₅ oxide, relative to the total weight of said catalyst.

5. Catalyst according to one of Claims 1 to 4, in which the initial lattice parameter a₀ of the unit cell of the zeolite Y is between 24.52 Å and 24.65 Å, preferably between 24.52 Å and 24.60 Å and very preferably between 24.52 Å and 24.58 Å.

6. Catalyst according to one of Claims 1 to 5, in which the catalyst has a content of zeolite Y of between 18 and 69% by weight relative to the total weight of said catalyst.

7. Catalyst according to one of Claims 1 to 6, in which said catalyst has a content of zeolite beta of between 2 and 15% by weight relative to the total weight of said catalyst.

8. Catalyst according to one of Claims 1 to 7, in which said catalyst has a content of at least one porous mineral matrix of between 8 and 59% by weight relative to the total weight of said catalyst.

9. Catalyst according to one of Claims 1 to 8, in which the weight ratio of said zeolite Y to said zeolite beta in the catalyst is between 5 and 10 and preferably between 5 and 8.

10. Process for the hydrocracking of at least one hydrocarbon feedstock, of which at least 50% by weight of the compounds have an initial boiling point above 300°C and a final boiling point below 650°C, at a temperature of between 200°C and 480°C, at a total pressure of between 1 MPa and 25 MPa, with a ratio of the volume of hydrogen to the volume of hydrocarbon feedstock of between 80 and 5000 litres per litre and at an hourly space velocity (HSV) defined by the ratio of the volume flow rate of hydrocarbon feedstock to the volume of catalyst charged into the reactor of between 0.1 and 50 h⁻¹, in the presence of the catalyst according to one of Claims 1 to 9.
